# EUROPEAN PATENT APPLICATION

(11) **EP 4 694 476 A1**
(43) Date of publication of application: **11.02.2026**
(21) Application number: 24806243.2
(22) Date of filing: 10.04.2024
(51) Int. Cl.: H04W 72/1273

(54) **DATA TRANSMISSION METHOD AND APPARATUS**

(30) Priority: 12.05.2023 CN 202310538763
(71) Applicant: Huawei Technologies Co., Ltd., Shenzhen, Guangdong 518129 (CN)
(72) Inventor: FU, Yu, Shenzhen, Guangdong 518129 (CN); QIN, Yi, Shenzhen, Guangdong 518129 (CN); CAO, Youlong, Shenzhen, Guangdong 518129 (CN)
(74) Representative: Gill Jennings & Every LLP
(86) International application number: PCT/CN2024/087077
(87) International publication number: WO 2024/234884

(57) **Abstract**

A data transmission method and apparatus are provided. The method includes: A network device sends first indication information to a terminal device, where the first indication information indicates the terminal device to send, when N time-frequency resources indicated by N received pieces of DCI overlap and amounts of data respectively carried by the N time-frequency resources are different, uplink data on one of the N time-frequency resources, and N is an integer greater than 1. The network device receives the uplink data on a first time-frequency resource, where the first time-frequency resource is one of the N time-frequency resources.

## Description

### CROSS-REFERENCE TO RELATED APPLICATIONS

This application claims priority to Chinese Patent Application No. 202310538763.0, filed with the China National Intellectual Property Administration on May 12, 2023 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In recent years, with continuous progress and improvement of an extended reality (extended reality, XR) technology, a related industry has developed vigorously. Nowadays, the extended reality technology has entered various fields, for example, education, entertainment, military affairs, medical care, environmental protection, transportation, and public health, closely related to production and life of people.

A multi-modal service as a new service adds a dimension of haptic experience on the basis of XR, to implement remote touch and remote control, and implement remote perception in a plurality of aspects such as visual, auditory, haptic, and kinetic aspects. The multi-modal service has huge potential for development in related fields such as industrial automation, medical care, and remote education, provides comprehensive interactive experience for a user, and has great application value and business potential.

Currently, a haptic signal has high requirements on both reliability and a delay. In consideration of a case in which a user may simultaneously use a plurality of haptic sensors, because signals of different haptic sensors are generated independently, a haptic signal that needs to be sent by the user is an aperiodic signal, and how to implement complete and timely transmission of the haptic signal is a problem worthy of attention.

### SUMMARY

This application provides a data transmission method and apparatus, to ensure transmission of a haptic signal.

According to a first aspect, this application provides a data transmission method. The method may be performed by a network device or a module (for example, a chip) in the network device. The method includes: sending first indication information to a terminal device, where the first indication information indicates the terminal device to send, when N time-frequency resources indicated by N received pieces of DCI overlap and amounts of data respectively carried by the N time-frequency resources are different, uplink data on one of the N time-frequency resources, and N is an integer greater than 1; and receiving the uplink data on a first time-frequency resource, where the first time-frequency resource is one of the N time-frequency resources.

In the foregoing method, the network device sends the first indication information, so that the terminal device may select an appropriate time-frequency resource to transmit the uplink data when the N time-frequency resources indicated by the N received pieces of DCI overlap and the amounts of data respectively carried by the N time-frequency resources are different, to further satisfy a transmission requirement of the uplink data and improve resource utilization.

In a possible design, HARQ procedure identifiers respectively corresponding to the N pieces of DCI are the same.

In a possible design, the first indication information is carried by using RRC signaling.

In a possible design, the N pieces of DCI are sent to the terminal device after the first indication information is sent to the terminal device.

In a possible design, time domain resources respectively corresponding to the N time-frequency resources are located in a same slot, and the time domain resources respectively corresponding to the N time-frequency resources overlap.

In a possible design, UCI is received from the terminal device, where the UCI indicates the first time-frequency resource.

In a possible design, that the N time-frequency resources overlap includes: The time domain resources respectively corresponding to the N time-frequency resources overlap and/or frequency domain resources respectively corresponding to the N time-frequency resources overlap. For example, the time domain resources respectively corresponding to the N time-frequency resources are the same.

In a possible design, sending time of the N pieces of DCI is between two neighboring uplink slots.

According to a second aspect, this application provides a data transmission method. The method may be performed by a terminal device or a module (for example, a chip) in the terminal device. The method includes: receiving first indication information from a network device, where the first indication information indicates to send, when N time-frequency resources indicated by N received pieces of DCI overlap and amounts of data respectively carried by the N time-frequency resources are different, uplink data on one of the N time-frequency resources, and N is a positive integer greater than 1; determining a first time-frequency resource from the N time-frequency resources based on a data amount of to-be-sent uplink data; and sending the to-be-sent uplink data on the first time-frequency resource.

In the foregoing method, the first indication information is received, so that the terminal device may select an appropriate time-frequency resource to transmit uplink data when the N time-frequency resources indicated by the N received pieces of DCI overlap and the amounts of data respectively carried by the N time-frequency resources are different, to further satisfy a transmission requirement of the uplink data and improve resource utilization.

In a possible design, HARQ procedure identifiers respectively corresponding to the N pieces of DCI are the same.

In a possible design, the first indication information is carried by using RRC signaling.

In a possible design, the N pieces of DCI are received from the network device after the first indication information is received from the network device.

In a possible design, time domain resources respectively corresponding to the N time-frequency resources are located in a same slot, and the time domain resources respectively corresponding to the N time-frequency resources overlap.

In a possible design, UCI is sent to the network device, where the UCI indicates the first time-frequency resource.

According to a third aspect, this application provides a data transmission method. The method may be performed by a network device or a module (for example, a chip) in the network device. The method includes: sending N pieces of DCI to a terminal device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is that the terminal device sends uplink data on one of the N time-frequency resources when the N time-frequency resources overlap and the amounts of data respectively carried by the N time-frequency resources are different; and receiving the uplink data on a first time domain resource, where the first time-frequency resource is one of the N time-frequency resources.

In the foregoing design, the network device sends the N pieces of DCI to the terminal device, and some or all of the N pieces of DCI may indicate the first event. Therefore, when determining the first event, the terminal device may select an appropriate time-frequency resource to transmit the uplink data, to further satisfy a transmission requirement of the uplink data and improve resource utilization.

In a possible design, when all of the N pieces of DCI further indicate the first event, the N pieces of DCI are all scrambled by using a preset RNTI.

In the foregoing design, signaling overheads can be reduced.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In the foregoing design, signaling overheads can be reduced.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In the foregoing manners, signaling overheads of a plurality of overlapping resources indicated by a plurality of pieces of DCI can be reduced.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, UCI is received from the terminal device, where the UCI indicates the first time-frequency resource.

According to a fourth aspect, this application provides a data transmission method. The method may be performed by a terminal device or a module (for example, a chip) in the terminal device. The method includes:
receiving N pieces of DCI from a network device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is sending uplink data on one of the N time-frequency resources when the N time-frequency resources overlap and the amounts of data respectively carried by the N time-frequency resources are different; determining a first time-frequency resource from the N time-frequency resources based on a data amount of to-be-sent uplink data; and sending the to-be-sent uplink data on the first time-frequency resource.

In the foregoing design, the terminal device receives the N pieces of DCI from the network device, and some or all of the N pieces of DCI may indicate the first event. Therefore, when determining the first event, the terminal device may select an appropriate time-frequency resource to transmit the uplink data, to further satisfy a transmission requirement of the uplink data and improve resource utilization.

In a possible design, when all of the N pieces of DCI further indicate the first event, the N pieces of DCI are all scrambled by using a preset RNTI.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, UCI is sent to the network device, where the UCI indicates the first time-frequency resource.

According to a fifth aspect, this application provides a data transmission apparatus. The apparatus includes a transceiver unit and a processing unit. The processing unit invokes the transceiver unit to: send first indication information to a terminal device, where the first indication information indicates the terminal device to send, when N time-frequency resources indicated by N received pieces of downlink control information DCI overlap and amounts of data respectively carried by the N time-frequency resources are different, uplink data on one of the N time-frequency resources, and N is an integer greater than 1; and receive the uplink data on a first time-frequency resource, where the first time-frequency resource is one of the N time-frequency resources.

In a possible design, hybrid automatic repeat request HARQ procedure identifiers respectively corresponding to the N pieces of DCI are the same.

In a possible design, the first indication information is carried by using radio resource control RRC signaling.

In a possible design, the transceiver unit is further configured to send the N pieces of DCI to the terminal device after sending the first indication information to the terminal device.

In a possible design, time domain resources respectively corresponding to the N time-frequency resources are located in a same slot, and the time domain resources respectively corresponding to the N time-frequency resources overlap.

In a possible design, the transceiver unit is further configured to receive uplink control information UCI from the terminal device, where the UCI indicates the first time-frequency resource.

According to a sixth aspect, this application provides a data transmission apparatus. The apparatus includes a transceiver unit and a processing unit. The transceiver unit is configured to receive first indication information from a network device, where the first indication information indicates to send, when N time-frequency resources indicated by N received pieces of DCI overlap and amounts of data respectively carried by the N time-frequency resources are different, uplink data on one of the N time-frequency resources, and N is a positive integer greater than 1. The processing unit is configured to determine a first time-frequency resource from the N time-frequency resources based on a data amount of to-be-sent uplink data. The transceiver unit is configured to send the to-be-sent uplink data on the first time-frequency resource.

In a possible design, HARQ procedure identifiers respectively corresponding to the N pieces of DCI are the same.

In a possible design, the first indication information is carried by using RRC signaling.

In a possible design, the transceiver unit is further configured to receive the N pieces of DCI from the network device after receiving the first indication information from the network device.

In a possible design, time domain resources respectively corresponding to the N time-frequency resources are located in a same slot, and the time domain resources respectively corresponding to the N time-frequency resources overlap.

In a possible design, the transceiver unit is further configured to send UCI to the network device, where the UCI indicates the first time-frequency resource.

According to a seventh aspect, this application provides a data transmission apparatus. The apparatus includes a transceiver unit and a processing unit. The processing unit invokes the transceiver unit to send N pieces of DCI to a terminal device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is that the terminal device sends uplink data on one of the N time-frequency resources when the N time-frequency resources overlap and the amounts of data respectively carried by the N time-frequency resources are different; and receive the uplink data on a first time domain resource, where the first time-frequency resource is one of the N time-frequency resources.

In a possible design, when all of the N pieces of DCI further indicate the first event, the N pieces of DCI are all scrambled by using a preset radio network temporary identifier RNTI.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, the transceiver unit is configured to receive UCI from the terminal device, where the UCI indicates the first time-frequency resource.

According to an eighth aspect, this application provides a data transmission apparatus. The apparatus includes a transceiver unit and a processing unit. The transceiver unit is configured to receive N pieces of DCI from a network device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is sending uplink data on one of the N time-frequency resources when the N time-frequency resources overlap and the amounts of data respectively carried by the N time-frequency resources are different. The processing unit is configured to determine a first time-frequency resource from the N time-frequency resources based on a data amount of to-be-sent uplink data. The transceiver unit is configured to send the to-be-sent uplink data on the first time-frequency resource.

In a possible design, when all of the N pieces of DCI further indicate the first event, the N pieces of DCI are all scrambled by using a preset RNTI.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, the transceiver unit is configured to send UCI to the network device, where the UCI indicates the first time-frequency resource.

For technical effects of the fifth aspect to the eighth aspect, refer to corresponding technical effects of the first aspect to the fourth aspect. Details are not described herein again.

According to a ninth aspect, an embodiment of this application provides a communication apparatus. The apparatus includes at least one processor and an interface circuit. The interface circuit is configured to provide the at least one processor with an input and/or output of a program or instructions. The at least one processor is configured to execute the program or the instructions to cause the communication apparatus to implement the method provided in any one of the first aspect or the possible implementations of the first aspect, execute the program or the instructions to cause the communication apparatus to implement the method provided in any one of the second aspect or the possible implementations of the second aspect, execute the program or the instructions to cause the communication apparatus to implement the method provided in any one of the third aspect or the possible implementations of the third aspect, or execute the program or the instructions to cause the communication apparatus to implement the method provided in any one of the fourth aspect or the possible implementations of the fourth aspect.

According to a tenth aspect, an embodiment of this application provides a computer storage medium. The storage medium stores a software program. When the software program is read and executed by one or more processors, the method provided in any one of the first aspect or the possible implementations of the first aspect may be implemented, the method provided in any one of the second aspect or the possible implementations of the second aspect may be implemented, the method provided in any one of the third aspect or the possible implementations of the third aspect may be implemented, or the method provided in any one of the fourth aspect or the possible implementations of the fourth aspect may be implemented.

According to an eleventh aspect, an embodiment of this application provides a computer program product including instructions. When the instructions run on a computer, the computer is caused to perform the method provided in any one of the first aspect or the possible implementations of the first aspect; the computer is caused to perform the method provided in any one of the second aspect or the possible implementations of the second aspect; the computer is caused to perform the method provided in any one of the third aspect or the possible implementations of the third aspect; or the computer is caused to perform the method provided in any one of the fourth aspect or the possible implementations of the fourth aspect.

According to a twelfth aspect, an embodiment of this application provides a chip system. The chip system includes a processor, configured to support a device in implementing a function in the first aspect, configured to support a device in implementing a function in the second aspect, configured to support a device in implementing a function in the third aspect, or configured to support a device in implementing a function in the fourth aspect.

In a possible design, the chip system further includes a memory. The memory is configured to store necessary program instructions and data. The chip system may include a chip, or may include a chip and another discrete device.

According to a thirteenth aspect, an embodiment of this application further provides a chip system. The chip system includes a processor and an interface. The interface is configured to obtain a program or instructions. The processor is configured to invoke the program or the instructions to implement or support a device in implementing a function in the first aspect, the processor is configured to invoke the program or the instructions to implement or support a device in implementing a function in the second aspect, the processor is configured to invoke the program or the instructions to implement or support a device in implementing a function in the third aspect, or the processor is configured to invoke the program or the instructions to implement or support the device in implementing a function in the fourth aspect.

In a possible design, the chip system further includes a memory. The memory is configured to store program instructions and data that are necessary for a terminal device. The chip system may include a chip, or may include a chip and another discrete device.

According to a fourteenth aspect, a communication system is provided. The system includes the apparatus (for example, the network device) in the first aspect and the apparatus (for example, the terminal device) in the second aspect, or the system includes the apparatus (for example, the network device) in the third aspect and the apparatus (for example, the terminal device) in the fourth aspect.

In this application, based on the implementations provided in the foregoing aspects, the implementations may further be combined to provide more implementations.

### BRIEF DESCRIPTION OF DRAWINGS

FIG. 1 is a diagram of an architecture of a mobile communication system to which an embodiment of this application is applied;
FIG. 2 is a diagram of transmission of a haptic signal in dynamic scheduling according to this application;
FIG. 3 is a diagram of transmission of a haptic signal in CG transmission according to this application;
FIG. 4 is an overview flowchart of a data transmission method according to this application;
FIG. 5 is an overview flowchart of another data transmission method according to this application;
FIG. 6 is a diagram of uplink data transmission according to this application;
FIG. 7 is a diagram 1 of a structure of a communication apparatus according to this application; and
FIG. 8 is a diagram 2 of a structure of a communication apparatus according to this application.

### DESCRIPTION OF EMBODIMENTS

The following clearly and completely describes the technical solutions in embodiments of this application with reference to accompanying drawings in embodiments of this application. It is clear that the described embodiments are merely some embodiments rather than all embodiments of this application. The terms "first" and "second", corresponding term numbers, and the like in this specification, the claims, and the accompanying drawings of this application are used for distinguishing between similar objects, and are not necessarily used for describing a specific sequence or order. It should be understood that the terms used in such a way are interchangeable in appropriate circumstances. This is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

The technical solutions provided in embodiments of this application may be applied to various communication systems. Embodiments of the present invention may be applied to a new radio (new radio, NR) system, or may be applied to another wireless communication system, for example, a long term evolution (long term evolution, LTE) system, a global system for mobile communications (global system for mobile communications, GSM), a mobile telecommunications system (universal mobile telecommunications system, UMTS), a code division multiple access (code division multiple access, CDMA) system, or a new network device system. This is not specifically limited in embodiments of this application. In addition, the terms "system" and "network" may be interchangeable with each other.

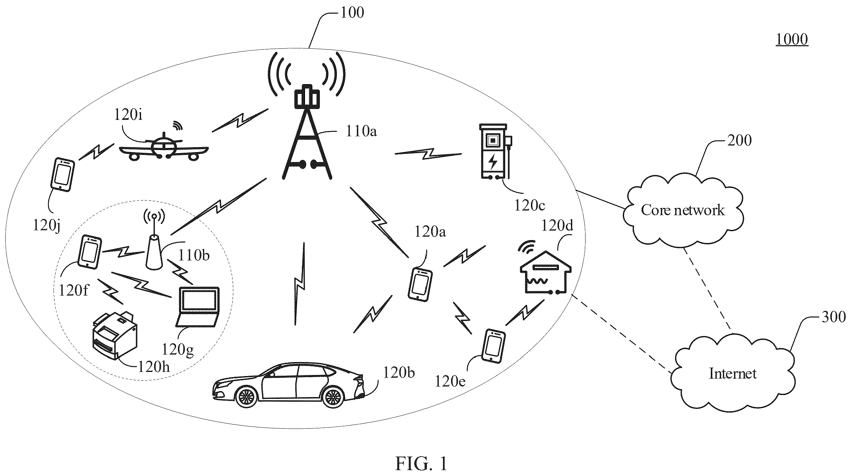

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for a connection between terminals and between radio access network devices. FIG. 1 is merely a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, or the like; or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all of functions of a physical layer. For detailed descriptions of the foregoing protocol layers, refer to technical specifications related to a 3^{rd} generation partnership project (3^{rd} generation partnership project, 3GPP). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application. For ease of description, a network device is used as an abbreviation of the radio access network device, and the base station is used as an example of the radio access network device.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, between the base stations, or between the terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely examples of a downlink data channel, a downlink control channel, an uplink control channel, and an uplink data channel. In different systems and different scenarios, a data channel and a control channel may have different names. This is not limited in embodiments of this application.

The following briefly describes technical concepts in this application.

### 1. Extended reality

Extended reality is a general term of various reality-related technologies, and specifically includes virtual reality (virtual reality, VR), augmented reality (augmented reality, AR), and mixed reality (mixed reality, MR).

A virtual reality technology is mainly to render visual and audio scenarios to simulate, as much as possible, sensory stimulation of vision and audios in a real world to a user. The virtual reality technology usually requires the user to wear a head mounted display (head mounted display, HMD) to completely replace a visual field of the user with a simulated visual component, and requires the user to wear a headset to provide the user with an accompanying audio. In addition, in VR, head and action tracking usually needs to be performed on the user, to update simulated visual and audio content in time, so that the visual and audio content experienced by the user is consistent with an action of the user.

An augmented reality technology is mainly to provide additional visual or auditory information or artificially generated content in a real environment perceived by a user. The real environment may be directly obtained by the user, in other words, without intermediate sensing, processing, and rendering, or may be indirectly obtained by the user, in other words, transferred by using a sensor or the like, to further perform enhancement processing.

A mixed reality technology is an advanced form of AR. One of implementations of the mixed reality technology is to insert some virtual elements into a physical scenario, to provide a user with immersive experience in which the elements are a part of a real scenario.

### 2. Haptic signal

The haptic signal has high requirements on both reliability and a delay. For example, in a current 3GPP standard, it is considered that an unencoded haptic signal requires transmission reliability of 99.9% and requires a delay of 5 ms, and an encoded haptic signal requires transmission reliability of 99.999%, and requires a delay of 5 ms.

The haptic signal has different features before and after being encoded. Before the haptic signal is encoded, signals generated by each haptic sensor are periodic, 500 to 2000 packets are generated per second, and a size of each packet is 12 to 48 bytes. After haptic encoding, signals generated by each haptic sensor arrive randomly, a time interval between two signal arrivals complies with generalized Pareto distribution, and a size of each packet that arrives remains unchanged.

It should be noted that, although sizes of signal packets generated by each haptic sensor after encoding are the same, in consideration of a case in which one user may simultaneously use a plurality of haptic sensors, because signals generated by each haptic sensor are independent of each other, uplink data that needs to be sent by the user is uneven, in other words, a haptic signal that needs to be sent by the user is an aperiodic signal. Unless otherwise specified, a haptic signal mentioned below is an encoded haptic signal.

It should be noted that, in the following embodiments of this application, a condition that the uplink data needs to satisfy is not limited, and is applicable to transmission of any uplink data. For example, uplink data transmitted by using a method provided in embodiments of this application may be uplink data that has high requirements on a delay and reliability and that is generated aperiodically. The high requirement on the delay may be understood as that a delay is required to be less than a preset delay threshold, and the high requirement on the reliability may be understood as that reliability is required to be greater than a preset reliability threshold. For example, the uplink data may be an encoded haptic signal, or other uplink data that is generated aperiodically. This is not limited in this application.

The following briefly describes an existing uplink data transmission solution.

### Solution 1: Dynamic scheduling

In a 5G network, the dynamic scheduling means that a network device uses control signaling in each slot to indicate a terminal device to send data. In this uplink data transmission solution, a time-frequency resource used for transmitting uplink data may be flexibly allocated based on a service requirement. However, related control signaling is needed for each time of scheduling, and control signaling overheads are high. A specific process is as follows:

When the terminal device needs to send uplink data, the terminal device sends a scheduling request (scheduling request, SR) to the network device on a PUCCH. The SR is used for requesting an uplink grant from the network device. The SR is only used for notifying the network device whether there is uplink data to be transmitted, but does not notify the network device of a data amount of the uplink data that needs to be transmitted.

After receiving the SR, the network device responds to the SR, in other words, provides the terminal device with an uplink grant. For example, the network device sends downlink control information (downlink control information, DCI) on a PDCCH. A DCI format (format) used for the DCI may be a DCI format 0_0 or 0_1. The DCI indicates to allocate, to UE, the time-frequency resource used for transmitting uplink data, that is, a PUSCH resource. In this case, the network device does not learn of an amount of data that needs to be transmitted by the terminal device. Generally, the network device may schedule the terminal device based on a small and fixed data amount. In addition, if the terminal device does not receive a response to the SR from the network device, the terminal device may continue to send the SR.

After receiving the DCI, the terminal device sends uplink data on the PUSCH resource allocated by the network device. The terminal device may send a buffer status report (buffer status report, BSR) on the PUSCH resource. The BSR is used for notifying the network device of an amount of data that still needs to be sent. If the BSR is greater than 0, the network device continues to schedule the terminal device, to be specific, allocates a PUSCH resource to the terminal device again through the PDCCH, and then the terminal device continues to perform data transmission on the allocated PUSCH resource.

For the foregoing solution 1, after a haptic signal arrives, the terminal device needs to first trigger reporting of an SR, and then report a BSR. Therefore, a transmission delay requirement of the haptic signal may not be satisfied.

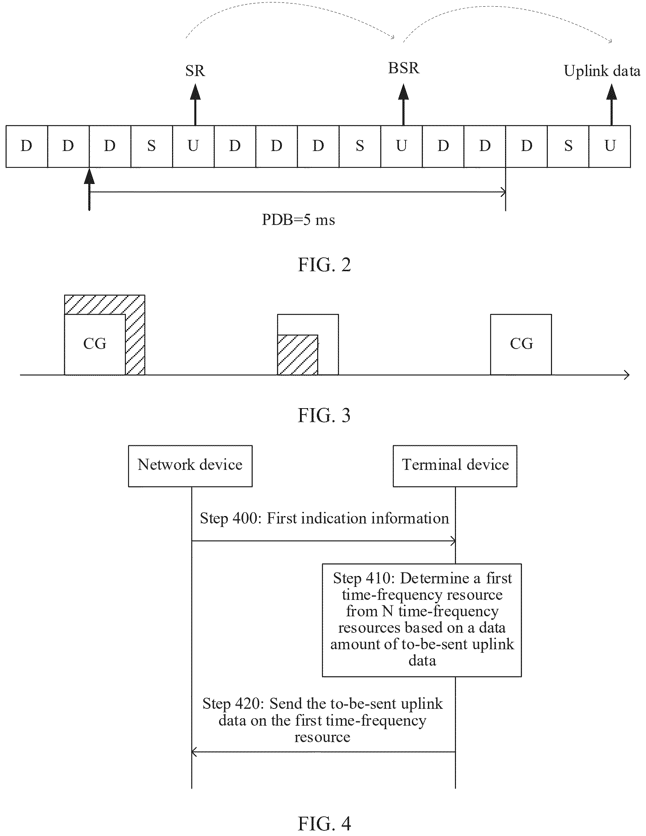

For example, FIG. 2 is a diagram of transmission of a haptic signal in dynamic scheduling. In FIG. 2, a slot configuration is DDDSU, a subcarrier spacing is 30 kHz, D represents a downlink slot, S represents a special slot, U represents an uplink slot, and a length of one slot is 0.5 ms. If the haptic signal arrives in a 3^{rd} downlink slot, the terminal device needs to first send an SR in a 1^{st} uplink slot. If a data amount of uplink data is large, the terminal device sends a BSR in a 2^{nd} uplink slot, and further needs to continue to perform data transmission in a 3^{rd} uplink slot. It should be learned that, in addition to sending the BSR in the 2^{nd} uplink slot, the terminal device also sends the uplink data. As shown in FIG. 2, in this case, a packet delay budget (packet delay budget, PDB), that is, 5 ms, has been exceeded. Therefore, the solution 1 may not satisfy a delay requirement of the haptic signal.

### Solution 2: Configured grant (configured grant, CG) transmission

For a service that satisfies a characteristic of periodic packet arrival, the configured grant transmission may be usually used during uplink transmission. The CG transmission means that during uplink transmission, a time-frequency resource used for transmitting uplink data needs to be allocated or specified only once by using radio resource control (radio resource control, RRC) or through a PDCCH, and then the time-frequency resource may be periodically and repeatedly used for uplink transmission.

There are two types of uplink pre-scheduling CG transmission. Type 1: A related parameter of the CG transmission is configured by using RRC. For example, the related parameter of the CG transmission includes a configured scheduling radio network temporary identifier (configured scheduling radio network temporary identifier, CS-RNTI), a CG cycle, a CG delay, and a frequency domain resource. In addition, the related parameter of the CG transmission is activated by using the RRC signaling.

Type 2: Similar to a resource configuration manner of semi-persistent scheduling (semi-persistent scheduling, SPS), a related parameter of the CG transmission is configured by using RRC. For example, the related parameter of the CG transmission includes a CS-RNTI, a CG cycle, a CG delay, and a frequency domain resource. A corresponding related parameter of the CG transmission is activated through a PDCCH.

For the foregoing solution 2, an amount of data that can be transmitted each time is fixed. However, because arrival time of a haptic signal is irregular, an amount of data that needs to be uploaded in each uplink slot is not fixed. Therefore, if a large CG resource is allocated, a resource waste is caused. If a small CG resource is allocated, the haptic signal cannot be transmitted in time.

As shown in FIG. 3, a CG resource is fixed, and an amount of data that can be transmitted is a fixed value. If an amount of data that needs to be transmitted is greater than the fixed value, transmission may not be performed in time. If an amount of data that needs to be transmitted is less than the fixed value, a resource waste is caused. For example, in FIG. 3, for a 1^{st} CG resource, if an amount of data that needs to be transmitted is greater than the fixed value, transmission may not be performed in time. For a 2^{nd} CG resource, if an amount of data that needs to be transmitted is less than the fixed value, a resource waste is caused. For a 3^{rd} CG resource, if an amount of data that needs to be transmitted is 0, a resource waste is caused.

### Solution 3: Uplink pre-scheduling

Different from the dynamic scheduling, the uplink pre-scheduling means that a terminal device does not need to send an SR, and a network device actively allocates, to the terminal device, a time-frequency resource used for transmitting uplink data, to reduce a transmission delay.

For the foregoing solution 3, to ensure that the haptic signal may be completely transmitted in time, the network device needs to reserve sufficient resources for the terminal device, and the resources can be used only by the terminal device. This may cause a resource waste.

Based on this, this application provides a data transmission method, to completely transmit a haptic signal in time and improve resource utilization. As shown in FIG. 4, the method includes the following steps.

Step 400: A network device sends first indication information to a terminal device.

The first indication information indicates the terminal device to send, when N time-frequency resources indicated by N received pieces of DCI overlap and amounts of data respectively carried by the N time-frequency resources are different, uplink data on one of the N time-frequency resources, and N is an integer greater than 1.

The first indication information may be carried by using RRC signaling. For example, 1 bit may be newly added to the RRC signaling, and the bit indicates whether the terminal device can send, when the N time-frequency resources indicated by the N received pieces of DCI overlap and the amounts of data respectively carried by the N time-frequency resources are different, the uplink data on one of the N time-frequency resources. For example, when a value of the bit is 1, it indicates that the terminal device can send the uplink data on one of the N time-frequency resources. When the value of the bit is 0, it indicates that the terminal device cannot send the uplink data on one of the N time-frequency resources, or the terminal device determines that an error occurs in a current configuration. In addition, the first indication information may alternatively be carried by using other signaling, or may be implemented by reusing an existing bit in the RRC signaling. This is not limited in this application.

In a possible design, the network device sends the N pieces of DCI to the terminal device after the network device sends the first indication information to the terminal device. Correspondingly, the terminal device receives the N pieces of DCI from the network device. The N pieces of DCI can indicate the N time-frequency resources, and the N pieces of DCI are in one-to-one correspondence with the N time-frequency resources.

It may be understood that the N pieces of DCI may be sent in different slots or at least two pieces of DCI may be sent in a same slot. This is not limited in this application. Sending time of the N pieces of DCI is between two neighboring uplink slots.

In a possible design, hybrid automatic repeat request (hybrid automatic repeat request, HARQ) procedure identifiers respectively corresponding to the N pieces of DCI are the same.

In addition, the first indication information may alternatively be described as follows: The first indication information indicates the terminal device to send, when the N time-frequency resources indicated by the N received pieces of DCI overlap, the amounts of data respectively carried by the N time-frequency resources are different, and the HARQ procedure identifiers respectively corresponding to the N pieces of DCI are the same, the uplink data on one of the N time-frequency resources.

Alternatively, the first indication information may be described as follows: If the first indication information indicates that there are N pieces of DCI with a same HARQ procedure identifier, the terminal device sends the uplink data on one of N time-frequency resources indicated by the N pieces of DCI with the same HARQ procedure identifier.

That the N time-frequency resources overlap includes: Time domain resources respectively corresponding to the N time-frequency resources overlap and/or frequency domain resources respectively corresponding to the N time-frequency resources overlap. The following uses an example to describe a possible case in which the N time-frequency resources overlap.

Example 1: The time domain resources respectively corresponding to the N time-frequency resources are located in a same slot, and the time domain resources respectively corresponding to the N time-frequency resources overlap.

For example, the time domain resources respectively corresponding to the N time-frequency resources may be the same.

Example 2: The frequency domain resources respectively corresponding to the N time-frequency resources have a same start location or a same end location.

For example, it is assumed that DCI sent at earliest time indicates a 1^{st} time-frequency resource, DCI sent at k^{th} time indicates a k^{th} time-frequency resource, and k is greater than 1 and less than or equal to N. In this case, a ratio of a frequency domain resource in the k^{th} time-frequency resource to a frequency domain resource in the 1^{st} time-frequency resource is less than 1 or greater than 1. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

For example, it is assumed that a value of N is 3, the frequency domain resource in the 1^{st} time-frequency resource is X RBs, a frequency domain resource in a 2^{nd} time-frequency resource is 2X/3 RBs, and a frequency domain resource in a 3^{rd} time-frequency resource is X/3 RBs.

Alternatively, it is assumed that a value of N is 3, the frequency domain resource in the 1^{st} time-frequency resource is X RBs, a frequency domain resource in a 2^{nd} time-frequency resource is 2X RBs, and a frequency domain resource in a 3^{rd} time-frequency resource is 3X RBs.

The example 1 and the example 2 may alternatively be combined with each other. It should be understood that the foregoing examples are not intended to limit this application.

Step 410: The terminal device determines a first time-frequency resource from the N time-frequency resources based on a data amount of to-be-sent uplink data. In other words, the first time-frequency resource is one of the N time-frequency resources.

The to-be-sent uplink data may alternatively be described as uplink data that needs to be sent, uplink data in a buffer (buffer), or the like. This is not limited in this application. For example, the to-be-sent uplink data includes a haptic signal. It may be understood that arrival time of the uplink data or time at which the haptic signal is generated is not limited in this application.

In a possible design, the terminal device sends uplink control information (uplink control information, UCI) to the network device, where the UCI indicates the first time-frequency resource. Correspondingly, the network device receives the UCI from the terminal device.

For example, the terminal device may sort amounts of data that can be carried by the N time-frequency resources, and the terminal device preferentially determines, in ascending order of the amounts of carried data, whether a time-frequency resource that carries the smallest amount of data can be used for carrying the to-be-sent uplink data. If the time-frequency resource can be used for carrying the to-be-sent uplink data, in other words, an amount of data that can be carried by the time-frequency resource is greater than or equal to the data amount of the to-be-sent uplink data, the time-frequency resource is selected to transmit the to-be-sent uplink data. If the time-frequency resource cannot be used for carrying the to-be-sent uplink data, in other words, an amount of data that can be carried by the time-frequency resource is less than the data amount of the to-be-sent uplink data, whether a next time-frequency resource (that is, a time-frequency resource that carries the second smallest amount of data) can be used for carrying the to-be-sent uplink data continues to be determined based on the foregoing order.

In conclusion, if the data amount of the to-be-sent uplink data is large, the terminal device selects a time-frequency resource carrying a large amount of data, so that the to-be-sent uplink data can be completely sent in time. If the data amount of the to-be-sent uplink data is small, the terminal device selects a time-frequency resource carrying a small amount of data. In addition, the terminal device may notify the network device of the time-frequency resource used by the terminal device, so that the network device may allocate a non-overlapping part of the time-frequency resource to another terminal device for use, to avoid a resource waste and improve resource utilization.

Step 420: The terminal device sends the to-be-sent uplink data on the first time-frequency resource. Correspondingly, the network device receives, on the first time-frequency resource, the to-be-sent uplink data sent by the terminal device.

Therefore, in the method provided in the embodiment shown in FIG. 4, a transmission requirement of the haptic signal can be satisfied and resource utilization is improved.

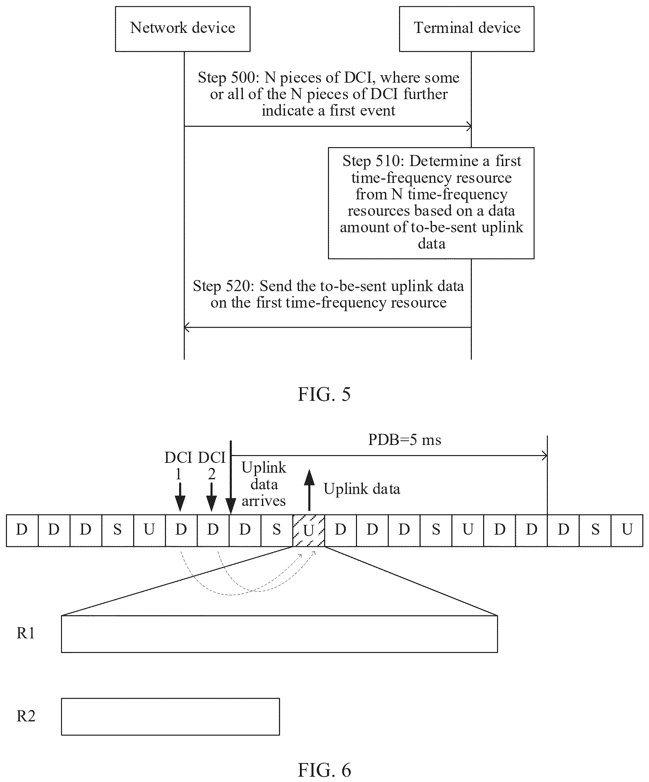

Based on this, this application further provides a data transmission method, to completely transmit a haptic signal in time and improve resource utilization. As shown in FIG. 5, the method includes the following steps.

Step 500: A network device sends N pieces of DCI to a terminal device.

The N pieces of DCI indicate N time-frequency resources, the N time-frequency resources overlap, amounts of data respectively carried by the N time-frequency resources are different, and N is a positive integer greater than 1.

Some or all of the N pieces of DCI further indicate a first event, and the first event is that the terminal device sends uplink data on one of the N time-frequency resources when the N time-frequency resources overlap and the amounts of data respectively carried by the N time-frequency resources are different.

It may be understood that the N pieces of DCI may be sent in different slots or at least two pieces of DCI may be sent in a same slot. This is not limited in this application. Sending time of the N pieces of DCI is between two neighboring uplink slots.

In a possible implementation, HARQ procedure identifiers respectively corresponding to the N pieces of DCI are the same.

In addition, the first event may alternatively be described as follows: The terminal device sends the uplink data on one of the N time-frequency resources when the N time-frequency resources overlap, the amounts of data respectively carried by the N time-frequency resources are different, and the HARQ procedure identifiers respectively corresponding to the N pieces of DCI are the same.

Alternatively, the first event may be described as follows: If there are N pieces of DCI with a same HARQ procedure identifier, the terminal device sends the uplink data on one of N time-frequency resources indicated by the N pieces of DCI with the same HARQ procedure identifier.

For related content about overlapping of the N time-frequency resources, refer to related descriptions in step 400. Details are not described herein again.

Some or all of the N pieces of DCI may further indicate the first event in, but not limited to, the following manners.

Manner 1: When all of the N pieces of DCI further indicate the first event, the N pieces of DCI are all scrambled by using a preset radio network temporary identifier (radio network temporary identifier, RNTI). In other words, the N pieces of DCI are scrambled by using a same preset RNTI, and the terminal device may determine the first event by descrambling the N pieces of DCI.

The preset RNTI may be a newly designed RNTI, or an RNTI that is specified in a protocol and that indicates the first event.

When the foregoing manner 1 is used, new signaling overheads do not need to be added.

Manner 2: When all of the N pieces of DCI further indicate the first event, the N pieces of DCI all include second indication information, and the second indication information indicates the first event.

For example, 1 bit may be newly added to the DCI, and the bit indicates the first event. In this case, the N pieces of DCI all need to include the newly added 1 bit, and all indicate the first event.

For example, it is assumed that a value of N is 3, and three pieces of DCI are respectively DCI 1, DCI 2, and DCI 3. The DCI 1 includes the second indication information, the DCI 2 includes the second indication information, and the DCI 3 includes the second indication information.

Manner 3: When some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

The preset DCI format used by the first part of DCI may be a newly added DCI format or a newly defined DCI format. For example, the newly defined DCI format is a DCI format 0_3.

In a possible implementation, the second part of DCI includes DCI sent at earliest time.

For example, the second part of DCI includes the DCI sent at the earliest time, and the first part of DCI includes N-1 pieces of DCI other than the DCI sent at the earliest time, which may alternatively be described as N-1 pieces of DCI after the DCI sent at the earliest time.

For example, it is assumed that the value of N is 3, and three pieces of DCI are respectively DCI 1, DCI 2, and DCI 3 in a sending time order. A DCI format used by the DCI 1 is a DCI format 0_0 or 0_1, and a DCI format used by the DCI 2 and the DCI 3 is the DCI format 0_3.

In addition, each piece of DCI in the first part of DCI may further indicate a proportional relationship or an inclusion relationship between a time-frequency resource indicated by the DCI and a time-frequency resource indicated by the DCI sent at the earliest time.

In a possible implementation, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource.

A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource. In addition, the start location or the end location of the frequency domain resource in the k^{th} time-frequency resource may alternatively be another location. This is not limited in this application. The network device and the terminal device may learn of the start location or the end location of the frequency domain resource in the k^{th} time-frequency resource.

In the foregoing manners, signaling overheads of a plurality of overlapping resources indicated by a plurality of pieces of DCI can be reduced.

For example, the preset DCI format used by the first part of DCI is the newly defined DCI format 0_3. The DCI format indicates PUSCH scheduling, and may be applied to a scenario in which the N time-frequency resources indicated by the N pieces of DCI overlap. The DCI format may include a modulation and coding scheme (modulation and coding scheme, MCS), a scheduling resource indication, and the like. The scheduling resource indication may indicate an inclusion relationship between the N time-frequency resources.

For example, it is assumed that the value of N is 3, and three pieces of DCI are respectively DCI 1, DCI 2, and DCI 3 in a sending time order. The DCI 1 indicates R1, the DCI 2 indicates R2, and the DCI 3 indicates R3. Start locations of frequency domain resources in R1, R2, and R2 are the same. A DCI format used by the DCI 1 is the DCI format 0_0 or 0_1, and a DCI format used by the DCI 2 and the DCI 3 is the DCI format 0_3.

The DCI 2 includes a scheduling resource indication, and the scheduling resource indication indicates a proportion of a frequency domain resource in R2 to a frequency domain resource in R1. The DCI 3 includes a scheduling resource indication, and the scheduling resource indication indicates a proportion of a frequency domain resource in R3 to the frequency domain resource in R1.

In addition, correspondences between a plurality of frequency domain resource ratios and corresponding indexes may be preconfigured by using RRC signaling, and the scheduling resource indication in the preset DCI format indicates the indexes, so that the terminal device may determine the frequency domain resource ratios based on the correspondences and the scheduling resource indication.

For example, the correspondences between the plurality of frequency domain resource ratios and the corresponding indexes are shown in Table 1.

**Table 1**

| Index | 0 | 1 | 2 | 3 |
|---|---|---|---|---|
| Frequency domain resource ratio | 1/4 | 1/2 | 1/3 | 2/3 |

It may be understood that Table 1 is merely an example, and is not intended to limit this embodiment of this application.

For example, if the DCI 2 includes a scheduling resource indication, and the scheduling resource indication indicates 1, the terminal device may determine, based on the correspondences and the scheduling resource indication, that the proportion of the frequency domain resource in R2 to the frequency domain resource in R1 is 1/2. If the DCI 3 includes a scheduling resource indication, and the scheduling resource indication indicates 3, the terminal device may determine, based on the correspondences and the scheduling resource indication, that the proportion of the frequency domain resource in R3 to the frequency domain resource in R1 is 2/3.

Step 510: The terminal device determines a first time-frequency resource from the N time-frequency resources based on a data amount of to-be-sent uplink data. In other words, the first time-frequency resource is one of the N time-frequency resources.

For step 510, refer to step 410.

Step 520: The terminal device sends the to-be-sent uplink data on the first time-frequency resource. Correspondingly, the network device receives, on the first time-frequency resource, the to-be-sent uplink data sent by the terminal device.

Therefore, in the method provided in the embodiment shown in FIG. 5, a transmission requirement of a haptic signal can be satisfied and resource utilization is improved.

Refer to FIG. 6. A network device sends two pieces of DCI to a terminal device: DCI 1 and DCI 2. The DCI 1 indicates a time-frequency resource R1, the DCI 2 indicates a time-frequency resource R2, and the DCI 1 and the DCI 2 are located between two neighboring uplink slots. R1 and R2 overlap in time domain. To be specific, a time domain resource in R1 is located in an uplink slot marked by diagonal lines, a time domain resource in R2 is located in the uplink slot marked by the diagonal lines, and there are overlapping time domain symbols between R1 and R2. There is an inclusion relationship between R1 and R2. As shown in FIG. 5, a start location of a frequency domain resource in R1 is the same as a start location of a frequency domain resource in R2, and the frequency domain resource in R1 is larger than the frequency domain resource in R2. It is assumed that uplink data arrives in a 3^{rd} downlink slot. In conventional technologies, the terminal device considers that the configuration is incorrect, and does not send the uplink data by using any time-frequency resource.

In the method provided in the embodiment shown in FIG. 4, the network device sends the first indication information to the terminal device, so that the terminal device selects a time-frequency resource from R1 or R2 based on a data amount of uplink data that needs to be sent, and sends the uplink data on the selected time-frequency resource, to further satisfy a transmission requirement of a haptic signal and improve resource utilization.

In the manner 1 provided in the embodiment shown in FIG. 5, the network device sends the two pieces of DCI to the terminal device: the DCI 1 and the DCI 2, and both the DCI 1 and the DCI 2 are scrambled by using an RNTI. In this case, the terminal device determines the first event based on the DCI 1 and the DCI 2, so that the terminal device selects a time-frequency resource from R1 or R2 based on a data amount of uplink data that needs to be sent, and sends the uplink data on the selected time-frequency resource, to further satisfy a transmission requirement of a haptic signal and improve resource utilization.

In the manner 2 provided in the embodiment shown in FIG. 5, the network device sends the two pieces of DCI to the terminal device: the DCI 1 and the DCI 2. The DCI 1 includes the second indication information, the DCI 2 includes the second indication information, and the second indication information indicates the first event. In this case, the terminal device determines the first event based on the DCI 1 and the DCI 2, so that the terminal device selects a time-frequency resource from R1 or R2 based on a data amount of uplink data that needs to be sent, and sends the uplink data on the selected time-frequency resource, to further satisfy a transmission requirement of a haptic signal and improve resource utilization.

In the manner 3 provided in the embodiment shown in FIG. 5, the network device sends the two pieces of DCI to the terminal device: the DCI 1 and the DCI 2. The DCI format used by the DCI 1 is different from the DCI format used by the DCI 2, and the DCI format used by the DCI 2 is the preset DCI format. In this case, the terminal device determines the first event based on the DCI 1 and the DCI 2, so that the terminal device selects a time-frequency resource from R1 or R2 based on a data amount of uplink data that needs to be sent, and sends the uplink data on the selected time-frequency resource, to further satisfy a transmission requirement of a haptic signal and improve resource utilization.

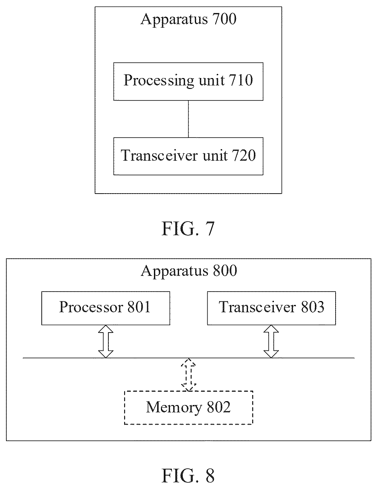

FIG. 7 is a possible example block diagram of a communication apparatus according to an embodiment of this application. The apparatus 700 includes a transceiver unit 720 and a processing unit 710. The transceiver unit 720 may include a receiving unit and a sending unit. The processing unit 710 is configured to control and manage an action of the apparatus 700. The transceiver unit 720 is configured to support the apparatus 700 in communicating with another network entity. Optionally, the apparatus 700 may further include a storage unit. The storage unit is configured to store program code and data of the apparatus 700.

Optionally, the units in the apparatus 700 may be implemented by using software.

Optionally, the processing unit 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit 710 may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver unit 720 may be a communication interface, a transceiver, a transceiver circuit, or the like. The communication interface is a general term. During specific implementation, the communication interface may include a plurality of interfaces. The storage unit may be a memory.

When the apparatus 700 is a terminal device or a chip in the terminal device, the processing unit 710 in the apparatus 700 may support the apparatus 700 in performing the actions of the terminal device in the foregoing method examples, for example, may support the apparatus 700 in performing step 410 in FIG. 4 or step 510 in FIG. 5.

The transceiver unit 720 may support the apparatus 700 in communicating with a network device. For example, the transceiver unit 720 may support the apparatus 700 in performing step 400 and step 420 in FIG. 4, or step 500 and step 520 in FIG. 5.

In a first possible implementation,
the transceiver unit 720 is configured to receive first indication information from the network device, where the first indication information indicates the terminal device to send, when N time-frequency resources indicated by N received pieces of DCI overlap and amounts of data respectively carried by the N time-frequency resources are different, uplink data on one of the N time-frequency resources, and N is a positive integer greater than 1.

The processing unit 710 is configured to determine a first time-frequency resource from the N time-frequency resources based on a data amount of to-be-sent uplink data.

The transceiver unit 720 is configured to send the to-be-sent uplink data on the first time-frequency resource.

In a possible design, HARQ procedure identifiers respectively corresponding to the N pieces of DCI are the same.

In a possible design, the first indication information is carried by using RRC signaling.

In a possible design, the transceiver unit is further configured to receive the N pieces of DCI from the network device after receiving the first indication information from the network device.

In a possible design, time domain resources respectively corresponding to the N time-frequency resources are located in a same slot, and the time domain resources respectively corresponding to the N time-frequency resources overlap.

In a possible design, the transceiver unit 720 is further configured to send UCI to the network device, where the UCI indicates the first time-frequency resource.

In a second possible implementation,
the transceiver unit 720 is configured to receive N pieces of DCI from the network device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is that the terminal device sends uplink data on one of the N time-frequency resources when the N time-frequency resources overlap and the amounts of data respectively carried by the N time-frequency resources are different.

The processing unit 710 is configured to determine a first time-frequency resource from the N time-frequency resources based on a data amount of to-be-sent uplink data.

The transceiver unit 720 is configured to send the to-be-sent uplink data on the first time-frequency resource.

In a possible design, when all of the N pieces of DCI further indicate the first event, the N pieces of DCI are all scrambled by using a preset RNTI.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, the transceiver unit 720 is configured to send UCI to the network device, where the UCI indicates the first time-frequency resource.

It should be understood that the apparatus 700 according to this embodiment of this application may correspond to the terminal device in the foregoing method embodiments, and operations and/or functions of the units in the apparatus 700 are respectively for implementing corresponding steps of the method of the terminal device in the foregoing method embodiments. Therefore, beneficial effects in the foregoing method embodiments can also be implemented. For brevity, details are not described herein again.

When the apparatus 700 is a chip in the network device, the processing unit 710 in the apparatus 700 may support the apparatus 700 in performing the actions of the network device in the foregoing method examples.

The transceiver unit 720 may support the apparatus 700 in communicating with the terminal device or a core network device. For example, the transceiver unit 720 may support the apparatus 700 in performing step 400 and step 420 in FIG. 4, or step 500 and step 520 in FIG. 5.

Corresponding to the first possible implementation,
the processing unit 710 invokes the transceiver unit 720 to send first indication information to the terminal device, where the first indication information indicates the terminal device to send, when N time-frequency resources indicated by N received pieces of downlink control information DCI overlap and amounts of data respectively carried by the N time-frequency resources are different, uplink data on one of the N time-frequency resources, and N is an integer greater than 1; and receive the uplink data on a first time-frequency resource, where the first time-frequency resource is one of the N time-frequency resources.

In a possible design, HARQ procedure identifiers respectively corresponding to the N pieces of DCI are the same.

In a possible design, the first indication information is carried by using RRC signaling.

In a possible design, the transceiver unit is further configured to send the N pieces of DCI to the terminal device after sending the first indication information to the terminal device.

In a possible design, time domain resources respectively corresponding to the N time-frequency resources are located in a same slot, and the time domain resources respectively corresponding to the N time-frequency resources overlap.

In a possible design, the transceiver unit 720 is further configured to receive uplink control information UCI from the terminal device, where the UCI indicates the first time-frequency resource.

Corresponding to the second possible implementation,
the processing unit 710 invokes the transceiver unit 720 to send N pieces of DCI to the terminal device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is that the terminal device sends uplink data on one of the N time-frequency resources when the N time-frequency resources overlap and the amounts of data respectively carried by the N time-frequency resources are different; and receive the uplink data on a first time domain resource, where the first time-frequency resource is one of the N time-frequency resources.

In a possible design, when all of the N pieces of DCI further indicate the first event, the N pieces of DCI are all scrambled by using a preset radio network temporary identifier RNTI.

In a possible design, when all of the N pieces of DCI further indicate the first event, the N pieces of DCI all include second indication information, and the second indication information indicates the first event.

In a possible design, when some of the N pieces of DCI further indicate the first event, the N pieces of DCI include a first part of DCI and a second part of DCI. The first part of DCI indicates the first event, the first part of DCI uses a preset DCI format, and the preset DCI format is different from a DCI format used by the second part of DCI.

In a possible design, the second part of DCI includes DCI sent at earliest time.

In a possible design, the DCI sent at the earliest time indicates a 1^{st} time-frequency resource, DCI sent at k^{th} time indicates a k^{th} time-frequency resource, and k is greater than 1 and less than or equal to N. The DCI sent at the k^{th} time further indicates a ratio of a frequency domain resource in the k^{th} time-frequency resource to a frequency domain resource in the 1^{st} time-frequency resource. A start location of the frequency domain resource in the k^{th} time-frequency resource is the same as a start location of the frequency domain resource in the 1^{st} time-frequency resource, or an end location of the frequency domain resource in the k^{th} time-frequency resource is the same as an end location of the frequency domain resource in the 1^{st} time-frequency resource.

In a possible design, HARQ procedure identifiers respectively corresponding to the N pieces of DCI are the same.

In a possible design, time domain resources respectively corresponding to the N time-frequency resources are located in a same slot, and the time domain resources respectively corresponding to the N time-frequency resources overlap.

In a possible design, the transceiver unit 720 is configured to receive UCI from the terminal device, where the UCI indicates the first time-frequency resource.

It should be understood that the apparatus 700 according to this embodiment of this application may correspond to the network device in the foregoing method embodiments, and operations and/or functions of the units in the apparatus 700 are respectively for implementing corresponding steps of the method of the network device in the foregoing method embodiments. Therefore, beneficial effects in the foregoing method embodiments can also be implemented. For brevity, details are not described herein again.

FIG. 8 is a diagram of a structure of a communication apparatus 800 according to an embodiment of this application. As shown in FIG. 8, the apparatus 800 includes a processor 801.

When the apparatus 800 is a terminal device or a chip in the terminal device, in a possible implementation, the processor 801 is configured to invoke an interface to perform the following actions:
receiving first indication information from a network device, where the first indication information indicates to send, when N time-frequency resources indicated by N received pieces of DCI overlap and amounts of data respectively carried by the N time-frequency resources are different, uplink data on one of the N time-frequency resources, and N is a positive integer greater than 1; determining a first time-frequency resource from the N time-frequency resources based on a data amount of to-be-sent uplink data; and sending the to-be-sent uplink data on the first time-frequency resource; or
receiving N pieces of DCI from a network device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is sending uplink data on one of the N time-frequency resources when the N time-frequency resources overlap and the amounts of data respectively carried by the N time-frequency resources are different; determining a first time-frequency resource from the N time-frequency resources based on a data amount of to-be-sent uplink data; and sending the to-be-sent uplink data on the first time-frequency resource.

It should be understood that the apparatus 800 may further be configured to perform other steps and/or operations on a terminal device side in the foregoing embodiments. For brevity, details are not described herein again.

When the apparatus 800 is a network device or a chip in the network device, in a possible implementation, the processor 801 is configured to invoke an interface to perform the following actions:
sending first indication information to a terminal device, where the first indication information indicates the terminal device to send, when N time-frequency resources indicated by N received pieces of downlink control information DCI overlap and amounts of data respectively carried by the N time-frequency resources are different, uplink data on one of the N time-frequency resources, and N is an integer greater than 1; receiving the uplink data on a first time-frequency resource, where the first time-frequency resource is one of the N time-frequency resources; or
sending N pieces of DCI to a terminal device, where the N pieces of DCI indicate N time-frequency resources, the N time-frequency resources overlap, amounts of data respectively carried by the N time-frequency resources are different, and N is a positive integer greater than 1; and some or all of the N pieces of DCI further indicate a first event, and the first event is that the terminal device sends uplink data on one of the N time-frequency resources when the N time-frequency resources overlap and the amounts of data respectively carried by the N time-frequency resources are different; and receiving the uplink data on a first time domain resource, where the first time-frequency resource is one of the N time-frequency resources.

It should be understood that the apparatus 800 may further be configured to perform other steps and/or operations on the network device in the foregoing embodiments. For brevity, details are not described herein again.

It should be understood that the processor 801 may invoke an interface to perform the foregoing receiving and sending actions. The invoked interface may be a logical interface or a physical interface. This is not limited. Optionally, the physical interface may be implemented by a transceiver. Optionally, the apparatus 800 further includes a transceiver 803.

Optionally, the apparatus 800 further includes a memory 802, and the memory 802 may store program code in the foregoing method embodiment, so that the processor 801 invokes the program code.

Specifically, if the apparatus 800 includes the processor 801, the memory 802, and the transceiver 803, the processor 801, the memory 802, and the transceiver 803 communicate with each other through an inner connection path, to transmit a control signal and/or a data signal. In a possible design, the processor 801, the memory 802, and the transceiver 803 may be implemented by a chip. The processor 801, the memory 802, and the transceiver 803 may be implemented in a same chip, or may be separately implemented in different chips, or functions of any two of the processor 801, the memory 802, and the transceiver 803 are implemented in one chip. The memory 802 may store the program code, and the processor 801 invokes the program code stored in the memory 802, to implement corresponding functions of the apparatus 800.

This application further provides a communication system. The system includes a terminal device and a network device. The network device is configured to perform steps and/or operations on a network device side in the foregoing embodiments, and the terminal device is configured to perform steps and/or operations on a terminal device side in the foregoing embodiments.

An embodiment of this application further provides a computer-readable storage medium. The computer-readable storage medium stores a computer program. When the computer program runs on a computer, the computer is caused to perform the methods described in the foregoing embodiments.

All or some of the methods in embodiments of this application may be implemented by using software, hardware, firmware, or any combination thereof. When the software is used for implementing embodiments, all or some of embodiments may be implemented in the form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, a solid-state drive (Solid-State Drive, SSD)), or the like.

In conclusion, the foregoing embodiments are merely intended to describe the technical solutions of this application in detail. However, the descriptions of the foregoing embodiments are merely intended to help understand the methods according to embodiments of the present invention, and shall not be construed as any limitation on embodiments of the present invention. Variations or replacements readily figured out by a person skilled in the art shall fall within the protection scope of embodiments of the present invention.

## Claims

1. A data transmission method, wherein the method comprises:
sending first indication information to a terminal device, wherein the first indication information indicates the terminal device to send, when N time-frequency resources indicated by N received pieces of downlink control information DCI overlap and amounts of data respectively carried by the N time-frequency resources are different, uplink data on one of the N time-frequency resources, and N is an integer greater than 1; and
receiving the uplink data on a first time-frequency resource, wherein the first time-frequency resource is one of the N time-frequency resources.

2. The method according to claim 1, wherein hybrid automatic repeat request HARQ procedure identifiers respectively corresponding to the N pieces of DCI are the same.

3. The method according to claim 1 or 2, wherein the first indication information is carried by using radio resource control RRC signaling.

4. The method according to any one of claims 1 to 3, wherein after sending the first indication information to the terminal device, the method further comprises:
sending the N pieces of DCI to the terminal device.

5. The method according to any one of claims 1 to 4, wherein time domain resources respectively corresponding to the N time-frequency resources are located in a same slot, and the time domain resources respectively corresponding to the N time-frequency resources overlap.

6. The method according to any one of claims 1 to 5, further comprising:
receiving uplink control information UCI from the terminal device, wherein the UCI indicates the first time-frequency resource.

7. A data transmission method, wherein the method comprises:
receiving first indication information from a network device, wherein the first indication information indicates to send, when N time-frequency resources indicated by N received pieces of DCI overlap and amounts of data respectively carried by the N time-frequency resources are different, uplink data on one of the N time-frequency resources, and N is a positive integer greater than 1;
determining a first time-frequency resource from the N time-frequency resources based on a data amount of to-be-sent uplink data; and
sending the to-be-sent uplink data on the first time-frequency resource.

8. The method according to claim 7, wherein HARQ procedure identifiers respectively corresponding to the N pieces of DCI are the same.

9. The method according to claim 7 or 8, wherein the first indication information is carried by using RRC signaling.

10. The method according to any one of claims 7 to 9, wherein after receiving the first indication information from the network device, the method further comprises:
receiving the N pieces of DCI from the network device.

11. The method according to any one of claims 7 to 10, wherein time domain resources respectively corresponding to the N time-frequency resources are located in a same slot, and the time domain resources respectively corresponding to the N time-frequency resources overlap.

12. The method according to any one of claims 7 to 11, further comprising:
sending UCI to the network device, wherein the UCI indicates the first time-frequency resource.

13. A data transmission apparatus, wherein the apparatus comprises a transceiver unit and a processing unit, and the processing unit invokes the transceiver unit to:
send first indication information to a terminal device, wherein the first indication information indicates the terminal device to send, when N time-frequency resources indicated by N received pieces of downlink control information DCI overlap and amounts of data respectively carried by the N time-frequency resources are different, uplink data on one of the N time-frequency resources, and N is an integer greater than 1; and receive the uplink data on a first time-frequency resource, wherein the first time-frequency resource is one of the N time-frequency resources.

14. The apparatus according to claim 13, wherein hybrid automatic repeat request HARQ procedure identifiers respectively corresponding to the N pieces of DCI are the same.

15. The apparatus according to claim 13 or 14, wherein the first indication information is carried by using radio resource control RRC signaling.

16. The apparatus according to any one of claims 13 to 15, wherein the transceiver unit is further configured to send the N pieces of DCI to the terminal device after sending the first indication information to the terminal device.

17. The apparatus according to any one of claims 13 to 16, wherein time domain resources respectively corresponding to the N time-frequency resources are located in a same slot, and the time domain resources respectively corresponding to the N time-frequency resources overlap.

18. The apparatus according to any one of claims 13 to 17, wherein the transceiver unit is further configured to receive uplink control information UCI from the terminal device, wherein the UCI indicates the first time-frequency resource.

19. A data transmission apparatus, wherein the apparatus comprises a transceiver unit and a processing unit, wherein
the transceiver unit is configured to receive first indication information from a network device, wherein the first indication information indicates to send, when N time-frequency resources indicated by N received pieces of DCI overlap and amounts of data respectively carried by the N time-frequency resources are different, uplink data on one of the N time-frequency resources, and N is a positive integer greater than 1;
the processing unit is configured to determine a first time-frequency resource from the N time-frequency resources based on a data amount of to-be-sent uplink data; and
the transceiver unit is configured to send the to-be-sent uplink data on the first time-frequency resource.

20. The apparatus according to claim 19, wherein HARQ procedure identifiers respectively corresponding to the N pieces of DCI are the same.

21. The apparatus according to claim 19 or 20, wherein the first indication information is carried by using RRC signaling.

22. The apparatus according to any one of claims 19 to 21, wherein the transceiver unit is further configured to receive the N pieces of DCI from the network device after receiving the first indication information from the network device.

23. The apparatus according to any one of claims 19 to 22, wherein time domain resources respectively corresponding to the N time-frequency resources are located in a same slot, and the time domain resources respectively corresponding to the N time-frequency resources overlap.

24. The apparatus according to any one of claims 19 to 23, wherein the transceiver unit is further configured to send UCI to the network device, wherein the UCI indicates the first time-frequency resource.

25. A data transmission apparatus, wherein the apparatus comprises a processor and a memory, wherein
the memory is configured to store computer program instructions; and
the processor is configured to execute a part or all of computer program instructions in the memory, and when the part or all of the computer program instructions are executed, the method according to any one of claims 1 to 6 or the method according to any one of claims 7 to 12 is implemented.

26. A chip, wherein the chip is coupled to a memory, and the chip reads a computer program stored in the memory, to perform the method according to any one of claims 1 to 6, or the method according to any one of claims 7 to 12.

27. A computer-readable storage medium, wherein the storage medium stores a computer program or instructions, and when the computer program or the instructions are executed by a communication apparatus, the method according to any one of claims 1 to 6 or the method according to any one of claims 7 to 12 is implemented.
